Europäisches Patentamt

European Patent Office

Office européen des brevets

(11) Veröffentlichungsnummer: **0 325 674**
**A1**

## (12) EUROPÄISCHE PATENTANMELDUNG

(21) Anmeldenummer: 88101303.1

(22) Anmeldetag: 29.01.88

(51) Int. Cl.⁴: **G01P 15/08**

(43) Veröffentlichungstag der Anmeldung:
02.08.89 Patentblatt 89/31

(84) Benannte Vertragsstaaten:
**AT CH DE GB LI**

(71) Anmelder: **Kistler Instrumente AG**
**Eulachstrasse 22**
**CH-8408 Winterthur(CH)**

(72) Erfinder: **Kübler, John M.**
**72, Bramblewood Lane**
**East Amherst N.Y. 14051(US)**

(74) Vertreter: **Schmidt, Horst, Dr.**
**Siegfriedstrasse 8**
**D-8000 München 40(DE)**

(54) **Wandlerelement zur Messung einer Drehbeschleunigung.**

(57) Ein Wandlerelement zur Messung von Drehbeschleunigungen umfasst ein Paar symmetrisch zu einer Hauptachse ᵧ auf einer Basisplatte (3) durch Befestigungselemente (2) gehaltene elektro-mechanisch reagierende Schwingbalken (1), die unter einer Drehung um die y-Achse eine Durchbiegung erfahren. Die für die Durchbiegung massgebenden elektrischen Ausgangssignale liegen an einer Signalverarbeitungsschaltung an, welche so ausgelegt ist, dass bei einer ungleichen elektrischen Polung der Schwingbalken (1) deren Ausgangssignale addiert und bei gleicher Polung subtrahiert werden. Das Ergebnis der Signalverarbeitung ist ein für die Drehbeschleunigung um die y-Achse kennzeichnendes Messignal. Die Schwingbalken können piezoelektrische oder mit piezoresistiven Halbleitern beschichtete oder mit Dehnungsmesstreifen versehene Biegeelemente sein. Die Signalverarbeitungsschaltung kann ferner so ausgelegt sein, dass zusätzlich zur Messung der Drehbeschleunigungen auch Longitudinalbeschleunigungen längs der z-Achse ermittelt werden können.

Fig. 1

## Wandlerelement zur Messung einer Drehbeschleunigung

Die Erfindung betrifft ein Wandlerelement zur Messung einer Drehbeschleunigung, vorzugsweise zur Anwendung in der Modalanalyse, sowie ein damit ausgestattetes Akzelerometer.

Die Kenntnis des Schwingungsverhaltens technischer Strukturen hat auf vielen Gebieten eine fundamentale Bedeutung. Die Analyse des Schwingungsverhaltens hat seiner Bedeutung wegen in neuerer Zeit einen speziellen Namen erhalten, nämlich Modalanalyse (Modal Testing). Ihr Charakter ist teilweise experimentell, teilweise theoretisch. Das Ziel besteht darin, ein mathematisches Modell des Schwingungsverhaltens einer Struktur zu gewinnen. Dass dies bei Turbinenschaufeln von Bedeutung ist, aber auch bei Brücken, ist evident. Akzelerometer sind die für die Analyse des Schwingungsverhaltens geeigneten Instrumente. Akzelerometer messen Beschleunigungen, wie sie beispielsweise bei Schwingungen auftreten. Bisher wurden, mangels geeigneter Instrumente, im wesentlichen Linearbeschleunigungen gemessen. Dies geschah so, dass das Akzelerometer mit dem zu messenden Objeckt an der Oberfläche fest verbunden wurde, entweder durch Aufschrauben oder Aufkleben des Akzelerometers. Traten nun im Objekt Vibrationen auf, so konnten die Beschleunigungen durch solch ein konventionelles Akzelerometer beispielsweise senkrecht zur Oberfläche gemessen werden, also in einer Dimension. Auch zwei- oder dreidimensionale Beschleunigungsmessungen waren und sind üblich, indem die Beschleunigung zusätzlich in einer oder zwei senkrecht zueinander stehenden Richtungen parallel zur Oberfläche des auszutestenden Objektes gemessen wird. Meistens wurden jedoch bisher Linearbeschleunigungen gemessen. Dabei zeigt die Theorie des Modal Testing, wie sie beispielsweise im Buch "Modal Testing, Theory and Practice", von D.E. Ewins, Research Study Press Ltd., 1984, auf den Seiten 87 - 152 beschrieben wird, dass die Drehbeschleunigungen ebenso wichtig sind wie die Linearbeschleunigungen und eine Modalanalyse ohne Analyse der Drehbeschleunigungen höchst unvollständig ist.

In dem genannten Buch sind auf den Seiten 146 bis 148 auch die Prinzipien der Drehbeschleunigungsmessung beschrieben, welche auf die Messung von Drehimpulsen durch Beschleunigungsmessung mit zwei Akzelerometern in einem bestimmten Abstand beruhen. Vereinzelt findet man auch in Firmenprospekten Instrumente beschrieben, welche sowohl der Messung von Linear- wie auch Drehbeschleunigungen dienen. Jedoch wird kein Instrument beschrieben, welches nur die Drehbeschleunigung messen kann, ohne Superposition einer Linear- oder Translationsbeschleunigung. Zudem haben die beschriebenen Akzelerometer eine zu geringe Empfindlichkeit und sind zu gross und zu schwer für Modalanalyse.

Es ist demzufolge die Aufgabe der vorliegenden Erfindung, ein Wandlerelement bzw. Akzelerometer der eingangs erwähnten Art zu schaffen, welches eine genaue Messung von Drehbeschleunigungen erlaubt und insbesondere, jedoch nicht ausschließlich für die Modalanalyse geeignet ist.

Die Aufgabe wird dadurch gelöst, dass symmetrisch zu einer Hauptachse ein Paar elektromechanisch reagierende Schwingbalken gehalten ist, deren für die Durchbeigung massgebenden elektrischen Ausgangssignale an einer Signalverarbeitungseinrichtung anliegen, welche bei ungleicher elektrischer Polung der Schwingbalken die Ausgangssignale addiert und bei gleicher elektrischer Polung subtrahiert, um ein für die Drehbeschleunigung um die Hauptachse kennzeichnendes Messignal zu schaffen. Durch die erfindungsgemässen Massnahmen wird der Einfluss der senkrecht zum Schwingbalkensystem wirkenden Linearbeschleunigungen eliminiert wird, so dass das erhaltene Messignal im wesentlichen proportional zur Drehbeschleunigung um die genannte Achse ist. Das Wandlerelement hat einen robusten einfachen Aufbau und lässt sich für die Belange der Modalanalyse leicht miniaturisieren. Gemäss einer Weiterbildung der Erfindung kann die Signalverarbeitungseinrichtung auch so ausgelegt sein, dass sie bei gleicher elektrischer Polung der Schwingbalken deren Ausgangssignale addiert und bei unterschiedlicher Polung subtrahiert, um ein für die Linearbeschleunigung längs einer zur Ebene der Schwingbalken senkrechten Achse kennzeichnendes Messignal zu schaffen. Mit ein und demselben Wandlerelement können daher getrennt sowohl Drehals auch Linearbeschleunigungen ermittelt werden. Vorzugsweise sind die Schwingbalken gemäss einer anderen Weiterbildung der Erfindung durch Befestigungselemente an einer mit einem Gehäuse verbindbaren Basisplatte montiert. Bei den Schwingbalken kann es sich um piezoelektrische, mit piezoresistivem Halbleitermaterial beschichtete oder mit Dehnungsmessstreifen versehene Biegeelemente handeln und ferner können die Schwingbalken als piezoelektrische Resonatoren ausgebildet sein. Die elektronische Ausrüstung kann ganz oder teilweise im Wandlerelement integriert sein. Die Erfindung schafft ferner ein Akzelerometer zur Messung von Dreh- und/oder Linearbeschleunigungen, welches sich dadurch auszeichnet, dass in einem Gehäuse wenigstens ein Wandlerelement der vorbeschriebenen Art symmetrisch zu einer der drei aufeinander senkrecht stehenden Hauptachsen angeordnet ist. Vorzugsweise ist jeder der drei Hauptachsen ein Wandlerelement zur Erfassung der Dreh- und/oder Linearbeschleunigungen in den drei Koordinatenrichtungen zugeordnet.

Die Erfindung wird nachfolgend anhand von Ausführungsformen und der Zeichnung näher erläutert. Es zeigen:

Fig. 1 in perspektivischer Ansicht ein erfindungsgemäss aufgebautes Wanderelement,

Fig. 2a bis d in schematischer Darstellung die schaltungstechnischen Massnahmen zur Elimination der Linearbeschleunigung bei Messung der Drehbeschleunigung (Fig. 2a, b) bzw. der Drehbeschleunigung bei Messung der Linearbeschleunigung (Fig. 2c, d),

Fig. 3 in geschnittener Ansicht ein Akzelerometer mit einem Wandlerelement nach der Erfindung.

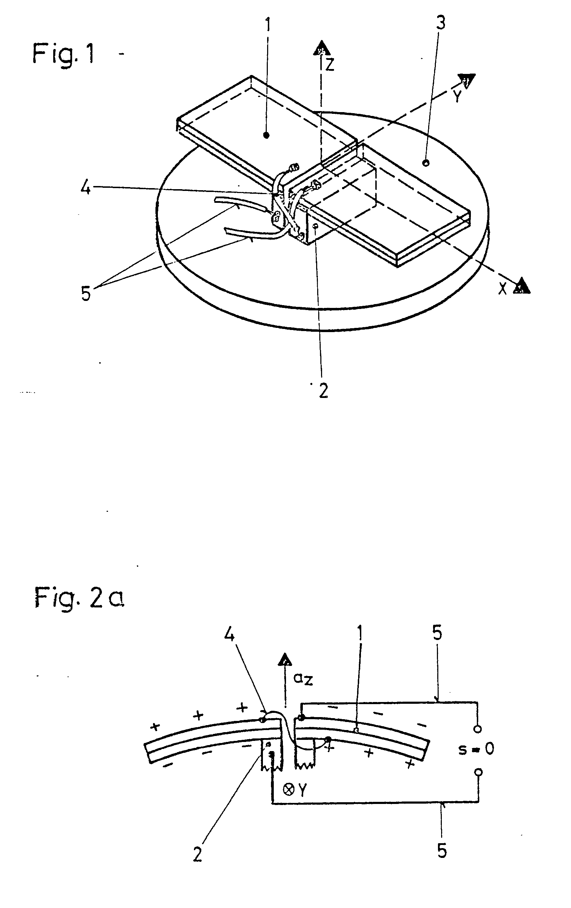

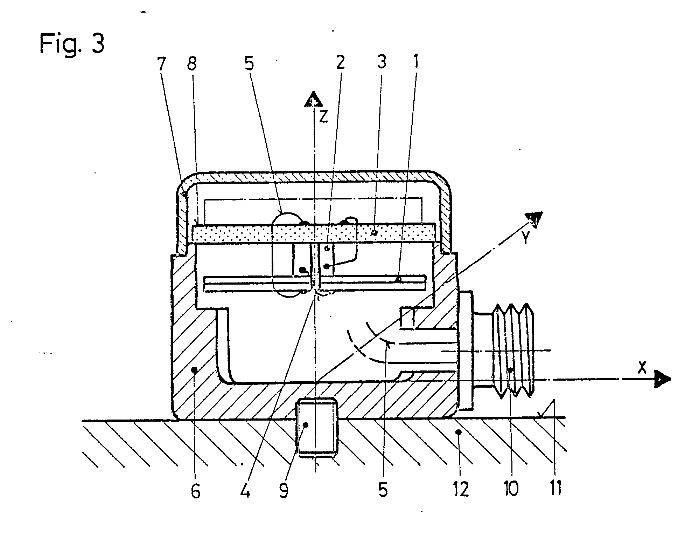

Wie in Fig. 1 dargestellt, umfaßt das Wandlerelement ein Paar auf einer starren elektrisch isolierenden Basisplatte oder -scheibe 3 mittels davon abstehender ebenfalls starrer Befestigungselemente 2 montierte Schwingbalken 1, die identisch ausgebildet sind und eine wesentlich grössere Ausdehnung in Längs-und Querrichtung als in Dickenrichtung besitzen. Die Schwingbalken 1 erstrecken sich symmetrisch beidseitig von und in Bezug auf eine durch den Mittelpunkt der Bassisscheibe 3 gehende Systemachse y·und liegen in Ruhestellung in einer durch die Achsen x, y aufgespannten Ebene senkrecht zur zentralen Achse z des Systems. Die Basisscheibe 3 dient zur Befestigung des Wandlerelementes in einem Gehäuse gemäss Fig. 3, um ein einsatzfertiges Akzelerometer zu schaffen. Die Bezugszeichen 4 und 5 in Fig. 1 betreffen elektrische Leiter zur elektrischen Verbindung der Schwingbalken bzw. zur Abführung der infolge ihrer Durchbiegung entstehenden elektrischen Ausgangssignale.

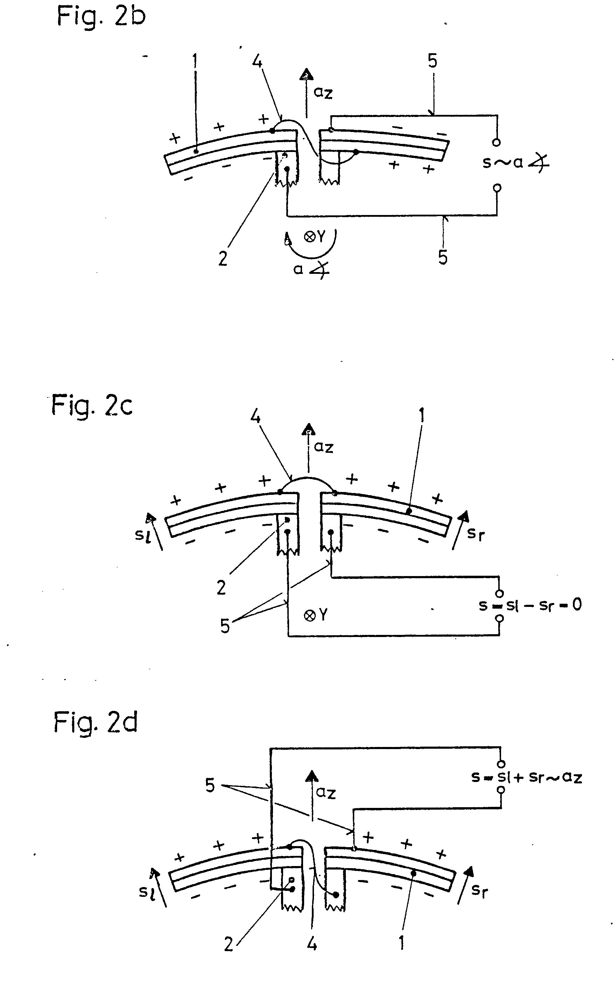

Erfährt das mit dem Messobjekt fest verbundene Gehäuse eines Akzelerometers beispielsweise eine Beschleunigung in z-Richtung nach oben, so wirkt die Beschleunigung über die Basisscheibe 3 und die Befestigungselemente 2 auf die Schwingbalken 1, die sich infolge ihrer Elastizität unter der Wirkung der Trägheitskräfte nach unten durchbiegen werden. Umgekehrt werden sich die Schwingbalken 1 bei einer nach unten gerichteten Beschleunigung nach oben biegen. Beschleunigungen in x- und y-Richtung, d.h. in der Zeichnungsebene, bewirken dagegen im wesentlichen keine Verformung der Schwingbalken 1, da diese sowohl in der x- wie y-Richtung wesentlich steifer als ·in z-Richtung sind. Ausser Linearbeschleunigungen in z-Richtung bewirken auch Drehbeschleunigungen des Wandlerelementes um die y-Achse eine Durchbiegung der Schwingbalken, wie dies weiter —— unten in Verbindung mit Fig. 2b erläutert wird. Die durch die Beschleunigungen verursachten Durchbiegungen der Schwingbalken werden messtechnisch erfasst und ausgewertet.

Die Wirkungsweise eines Wandlerelementes mit dem vorgenannten Aufbau wird nachfolgend in Verbindung mit der bevorzugten Ausbildung der Schwingbalken 1 als piezoelektrische bimorphe Elemente unter bevorzugter Ausnutzung des Transversaleffektes beschrieben. Es versteht sich jedoch, dass die Erfindung hierauf nicht beschränkt ist, sondern auch andere elektro-mechanisch reagierende Schwingbalken, z.B. in Gestalt von. mit piezoresistivem Halbleitermaterial beschichteten Biegeelementen vorgesehen werden können. Auch kann die Erfassung der Durchbiegung mittels auf den Schwingbalken befestigter Dehnungsmessstreifen erfolgen.

Piezoelektrische bimorphe Elemente sind dem Fachmann bekannt und beispielsweise in "Piezoelektrische Messtechnik" von J. Tichy und G. Gautschi, Springer Verlag, 1980, Seite 149, beschrieben. Wird ein Balken nach unten durchgebogen, so wird er oberhalb der neutralen Faser auf Zug, unterhalb der neutralen Faser auf Druck beansprucht. Hierbei entstehen auf der oberen Seite des Balkens beispielsweise positive, auf der Unterseite negative Ladungen. Auf der Oberseite der Balken sind deshalb elektrische Kontakte (nicht bezeichnet) angebracht, ebenso an den·mit den Unterseiten der Balken elektrisch leitend verbundenen Befestigungselementen 2, die elektrisch leitend sind. An diesen elektrischen Kontakten sind entweder Verbindungsleitungen 4 angebracht, welche der elektrischen Zusammenschaltung der Piezoelemente dienen, oder Signalleitungen 5, welche der Signalableitung, z.B. zu Ladungsverstärkern dienen. Wie in Fig. 1 gezeigt, sind die beiden Schwingbalken 1 sowohl elektrisch wie mechanisch getrennt. Die mechanische Trennung verbessert die Widerstandsfähigkeit gegen Schockbeanspruchung.

Die Figuren 2a und 2b zeigen schematisch die Signalauswertung, ebenfalls am Beispiel des piezoelektrischen bimorphen Balkenelementes dargestellt. Die Ziffern haben dieselbe Bedeutung wie in Fig. 1. Der in Figur 2a auf der linken Seite dargestellte Balken 1 ist so gepolt, dass bei einer Durchbiegung nach unten auf der Oberseite positive, auf der Unterseite negative Ladungen entstehen. Der auf der rechten Seite dargestellte Balken 1 ist umgekehrt gepolt, d.h. es entstehen bei einer Durchbiegung nach unten auf der Oberseite negative, auf der Unterseite positive Ladungen. Eine Beschleunigung $a_z$ in der z-Richtung, d.h. senkrecht zu den beiden Balken, erzeugt in jedem Balken dieselbe nach unten gerichtete Durchbiegung. Auf der linken Seite entsteht, absolut genommen, dasselbe Signal wie auf der rechten Seite, jedoch mit umgekehrtem Vorzeichen. Durch Hintereinanderschaltung der beiden Signale, d.h. durch elektrische Verbindung z.B. der Oberseite links mit der Unterseite rechts, addieren sich die Ausgangssignale der Schwingbalken zum dargestellten Messignal s, das zwischen der Oberseite des rechten Balkens und der Unterseite des linken Balkens liegt und null wird ($s = 0$).

Hiermit ist gezeigt, dass durch die dargestellte Additionsschaltung bei ungleicher Polung der Schwingbalken 1 links und rechts eine Linearbeschleunigung senkrecht zu den Schwingbalken kein Ausgangssignal erzeugt. Voraussetzung dazu ist, dass die beiden Balken bis auf ihre elektrische Polung identisch sind. Es ergibt sich unmittelbar aus derselben Figur, dass bei gleicher elektrischer Polung der Balken auf der linken wie auf der rechten Seite - d.h. wenn beispielsweise bei Durchbiegung nach unten rechts ebenfalls positive Ladungen auf der Oberseite und negative Ladungen auf der Unterseite erzeugt würden - die Ausgangssignale subtrahiert werden müssten, um den Einfluss einer Beschleunigung $a_z$ in der z-Richtung zu eliminieren. Schaltungstechnisch müsste dann z.B. die Oberseite des linken Balkens mit der Oberseite des rechten Balkens elektrisch verbunden und das resultierende Messignal s zwischen beiden Unterseiten abgegriffen werden. Zeichnerisch ist dieser Fall nicht separat dargestellt.

Fig. 2b entspricht der Fig. 2a, nur tritt hier zusätzlich zu der Linearbeschleunigung $a_z$ noch eine Drehbeschleunigung a ⋋ um die zwischen den Schwingbalken 1 liegende y-Achse auf. Wie oben dargestellt, hat die Linearbeschleunigung keine Wirkung auf das Signal s. Die Drehbeschleunigung hingegen erzeugt Drehimpulsänderungen und damit ungleiche, sich zeitlich ändernde Kräfte am linken wie am rechten Balken, womit sich auch die Ladungen ändern.

Die überlagerte Drehbeschleunigung hat zur Folge, dass einer (in der Zeichnung der rechte) Schwingbalken 1 etwas weniger als der andere (linke) Schwingbalken nach unten gebogen wird. Dadurch entstehen auf der Oberseite des einen Schwingbalkens geringere negative Ladungen als positive Ladungen auf der Oberseite des anderen Schwingbalkens. Die Schwingbalken sind wie bei Fig. 2a umgekehrt gepolt. Aus Fig. 2b geht hervor, dass wegen der unterschiedlichen Ausganssignale der Schwingbalken ein Messignal s entsteht, das proportional zur Winkelbeschleunigung ist.

Daraus folgt, dass durch eine Auswertung der an den Schwingbalken auftretenden elektrischen Ausgangssignale mittels einer geeigneten, dem Fachmann an sich bekannten Signalverarbeitungs einrichtung bzw. -schaltung reine Drehbeschleunigungen ohne interferierende Linearbeschleunigungen ermittelt werden können.

Es ist aber auch möglich, durch geeignete schaltungstechnische Massnahmen mit demselben Akzelerometer sowohl Dreh- wie auch Linearbeschleunigungen zu messen. Vereinfacht wird dies anhand der Figuren 2c und 2d gezeigt. Fig. 2c zeigt ein Messystem mit gleicher elektrischer Polung des linken und des rechten Schwingbalkens, das mit einer Beschleunigung $a_z$ in z-Richtung aufwärts bewegt wird. Eine Drehbeschleunigung tritt nicht auf. Das am linken Balken auftretende Signal wird mit $s_l$ bezeichnet, das am rechten Balken auftretende Signal mit $s_r$. Bringt man, im Gegensatz zu Fig. 2a, eine Differenzschaltung durch Verbindung der oberen positiv geladenen Seiten und Signalabgriff an den Befestigungselementen 2 an, so ist das gesamte Signal $s = s_l - s_r = 0$, wie es sein muss bei Abwesenheit einer Drehbeschleunigung und wie es, als dualer Fall zur Fig. 2a, bereits beschrieben wurde. Addiert man jedoch die beiden Signale $s_l$ und $s_r$, z.B. durch elektrische Verbindung der Oberseite des linken Balkens mit der Unterseite des rechten Balkens und Signalabgriff auf den Oberseiten beider Balken, so erhält man als Signal $s = s_l + s_r$, also als Summe der auf beide Balken wirkenden Kräfte, die proportional der Beschleunigung $a_z$ in der z-Richtung sein muss. Die Beziehungen gelten auch dann, wenn sowohl eine Drehbeschleunigung a⋋ wie eine Linearbeschleunigung $a_z$ auftreten. Die Differenz $s_l - s_r$ ist dann ein Mass für die Drehbeschleunigung a ⋋, die Summe $s_l + s_r$ ein Mass für die Linearbeschleunigung $a_z$, wie ebenfalls dem bereits genannten Buch "Modal Testing, Theory and Practice", S. 146 ff entnommen werden kann. Diese Darstellung gilt für gleiche Polung der Schwingbalken. Bei umgekehrter Polung tritt an die Stelle von Differenzbildung Summenbildung und umgekehrt. Jedenfalls wurde dargestellt, dass sich durch einfache schaltungstechnische Massnahmen, die sich auf die Signalverarbeitung auswirken, das Wandlerelement sowohl zur Messung der Win kelbeschleunigung wie auch der Linearbeschleunigung eignet. Linearbeschleunigungen längs einer senkrecht zu einer Messobjektoberfläche liegenden z-Achse und Drehbeschleunigungen um eine parallel zu derselben Fläche liegende y- oder x-Achse treten bei der Analyse von Schwingungen, eben der Modalanalyse, auf.

Fig. 3 zeigt einen Querschnitt durch ein erfindungsgemässes Akzelerometer zur Messung der Drehbeschleunigung um eine parallel zur Oberfläche des Messobjektes 11 stehende Achse y, senkrecht zur Zeichnungsebene. Die bisher schon verwendeten Ziffern haben dieselbe Bedeutung, wie bei den bisherigen Figuren. Das aus Basisscheibe 3, Befestigungselementen 2 und den Schwingbalken 1 bestehende Messystem ist starr mit einem aus einem massiven Gehäusegrundkörper 6 und einem Gehäusedeckel 7 bestehenden Aufnehmerkörper verbunden. Die Funktion des Messystems wurde bereits in der Beschreibung von Fig. 1 erklärt. Dargestellt ist hier eine Additionsschaltung, gemäss Fig. 2a, bei der der Schwingbalken 1 auf der linken Seite umgekehrt gepolt ist, wie jener auf der rechten Seite. Die Ableitung der Signale erfolgt bei den nicht bezeichneten Kontaktstellen auf der Basisscheibe 3, von denen Leitungen 5 (gestrichelt gezeichnet) durch einen Steckeranschluss 10 nach aussen führen. An den Steckeranschluss 10 kann sich in konventioneller Weise ein geräuscharmes Kabel hoher Impedanz anschliessen (nicht gezeichnet), welches zu einer externen elektronischen Signalauswertungseinheit führt. Diese elektronische Signalauswertung kann aber auch in den Aufnehmerkörper integriert werden, indem die dazu notwendigen elektronischen Bauteile, wie z.B. Ladungsverstärker, beispielsweise auf die Basisscheibe 3 montiert werden. Diese Integration der Elektronik eliminiert Probleme, die bei der Signalübermittlung durch Kabel hoher Impedanz entstehen können. Wichtig ist, dass die Vibrationen des Mess objektes 12 unverfälscht über den Aufnehmerkörper 6, 7 und die Stufe 8 auf das Wandlerelement übertragen werden. Zu diesem Zweck muss das Akzelerometer fest mit der Oberfläche 11 des Messobjektes verbunden sein, was üblicherweise durch eine Befestigungsschraube 9 geschieht. Auch eine feste Klebverbindung zwischen Akzelerometer und der genannten Oberfläche ist möglich.

Das in Fig. 3 dargestellte Akzelerometer kann durch Vibrationen verursachte Drehbeschleunigungen um die y-Achse (senkrecht zur Zeichenebene, wie in der Figur dargestellt) messen. Durch Vorsehen mehrerer Wandlerelemente derart, dass alle drei senkrecht zueinander stehenden Koordinatenachsen belegt sind, kann ein Akzelerometer zur Messung der Drehbeschleunigungen um jede der Achsen x, y und z gebaut werden. Wird anstelle der in Fig. 3 gezeigten Additionsschaltung bei elektrisch umgekehrt gepolten Schwingbalken eine Subtraktionsschaltung vorgesehen oder auf eine derartige Schaltung umgeschaltet, so können zusätzlich die längs der Achsen x, y, z wirkenden Linearbeschleunigungen erfasst werden. Durch die Erfindung ist somit ein baulich einfaches kleines und leichtes Wandlerelement bzw. Akzelerometer geschaffen, welches eine saubere Trennung von Dreh- und Linearbeschleunigungen erlaubt und für die Modalanalyse besonders geeignet ist.

## Ansprüche

1. Wandlerelement zur Messung einer Drehbeschleunigung, dadurch gekennzeichnet, dass symmetrisch zu einer Hauptachse (y) ein Paar elektromechanisch reagierende Schwingbalken (1) gehalten ist, deren für die Durchbiegung maßgebenden elektrischen Ausgangssignale an einer Signalverarbeitungseinrichtung anliegen, welche bei ungleicher elektrischer Polung der Schwingbalken die Ausgangssignale addiert und bei gleicher elektrischer Polung subtrahiert, um ein für die Drehbeschleunigung um die Hauptachse kennzeichnendes Messignal zu schaffen.

2. Wandlerelement nach Anspruch 1, dadurch gekennzeichnet, dass die Signalverarbeitungseinrichtung ferner ausgelegt ist, um bei gleicher elektrischer Polung der Schwingbalken (1) deren Ausgangssignale zu addieren und bei ungleicher Polung zu subtrahieren, um ein für die Linearbeschleunigung längs einer zur Ebene der Schwingbalken senkrechten Achse (z) kennzeichnendes Messignal zu schaffen.

3. Wandlerelement nach Anspruch 1 oder 2, dadurch gekennzeichnet, dass die Schwingbalken (1) durch Befestigungselemente (2) an einer mit einem Gehäuse (6,7) verbindbaren Basisplatte (3) montiert sind.

4. Wandlerelement nach Anspruch 1, oder 2 oder 3, dadurch gekennzeichnet, dass die Schwingbalken piezoelektrische Biegeelemente umfassen.

5. Wandlerelement nach Anspruch 1, oder 2 oder 3, dadurch gekennzeichnet, dass die Schwingbalken (1) mit piezoresistivem Halbleitermaterial beschichtet sind.

6. Wandlerelement nach Anspruch 1, oder 2 oder 3, dadurch gekennzeichnet, dass die Schwingbalken (1) mit Dehnungsmessstreifen versehene Biegeelemente sind.

7. Wandlerelement nach Anspruch 1, oder 2 oder 3, dadurch gekennzeichnet, dass die Schwingbalken (1) als piezoelektrische Resonatoren ausgebildet sind.

8. Wandlerelement nach einem der vorhergehenden Ansprüche, dadurch gekennzeichnet, dass die elektronische Ausrüstung ganz oder teilweise darin integriert ist

9. Akzelerometer zur Messung der Dreh- und/oder Linearbeschleunigung, dadurch gekennzeichnet, dass in einem Gehäuse (6,7) wenigstens ein Wandlerelement nach einem der vorhergehenden Ansprüche symmetrisch zu einer der drei aufeinander senkrecht stehenden Achsen x, y, z angeordnet ist.

Fig. 1

Fig. 2a

**Fig. 2b**

**Fig. 2c**

$$s = s_l - s_r = 0$$

**Fig. 2d**

$$s = s_l + s_r \sim a_z$$

Fig. 3

Europäisches
Patentamt

**EUROPÄISCHER RECHERCHENBERICHT**

Nummer der Anmeldung

EP 88 10 1303

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US-A-4 431 935 (RIDER) <br> * Figur 1; Spalte 2, Zeilen 6-43 * | 1-4,9 | G 01 P 15/08 |
| Y | | 5,7 | |
| Y | GB-A-2 055 018 (KUREHA KAGAKU) <br> * Figuren 1,2; Seite 2, Zeilen 73-107 * <br> --- | 2-4,9 | |
| Y | US-A-3 842 681 (MUMME) <br> * Figur 1; Zusammenfassung; Anspruch 1 * <br> --- | 7 | |
| Y | DE-C-1 132 368 (WESTERN ELECTRIC) <br> * Figur 1; Anspruch 1 * <br> --- | 5 | |
| Y | WO-A-8 101 461 (APPLIED DEVICES) <br> * Figuren 4-9; Seite 6, Zeile 32 - Seite 9, Zeile 13; Seite 18, Anspruch 9 * <br> ----- | 1-4,9 | |

|  | RECHERCHIERTE SACHGEBIETE (Int. Cl.4) |
|---|---|
| | G 01 P <br> G 01 V <br> G 01 C |

Der vorliegende Recherchenbericht wurde für alle Patentansprüche erstellt

| Recherchenort | Abschlußdatum der Recherche | Prüfer |
|---|---|---|
| DEN HAAG | 03-10-1988 | KOLBE W.H. |